Europäisches Patentamt

(19) European Patent Office

Office européen des brevets

(11) Publication number: 0 116 286
A1

(12) # EUROPEAN PATENT APPLICATION

(21) Application number: 84100228.0

(22) Date of filing: 11.01.84

(51) Int. Cl.³: A 47 J 31/30

(30) Priority: 14.01.83 IT 1910583

(43) Date of publication of application:
22.08.84 Bulletin 84/34

(84) Designated Contracting States:
CH DE FR GB LI

(71) Applicant: Giacomini, Arnaldo
Via E. De Amicis No. 37
I-28026 Omegna Novara(IT)

(72) Inventor: Giacomini, Arnaldo
Via E. De Amicis No. 37
I-28026 Omegna Novara(IT)

(74) Representative: Coloberti, Luigi
Via E. de Amicis No. 25
I-20123 Milano(IT)

(54) Coffee-maker.

(57) A coffee-maker comprising a substantially flat base (1) defining a heating chamber (7) containing a measured quantity of water, said heating chamber (7) extending widthwise in the main plane of the aforesaid base (1); a supporting column (2) for an infusion chamber (3) which communicates with the heating chamber (7) by means of a feeding channel (14) in the supporting column (2) and a lid (4) for closing the infusion chamber (3). The lid (4) comprises a coffee-dispensing chamber (23) which communicates with the infusion chamber (3) and, respectively, with lateral output channels (24) for the coffee which is collected in cups (10) placed directly on the base (1) of the coffee-maker.

Fig.1

0116286

### Coffee-maker

This invention concerns a coffee-maker which, both from the structural and functional point of view, consists of several different parts in order to allow a different conformation and use of the coffee-maker itself.

The currently-known coffee-makers which collect the coffee infusion internally, are substantially composed of a single almost cylindrical, truncated cone or similar-shaped body, comprising a boiler for heating the water, into which is inserted a funnel-shaped coffee-filter which communicates with an upper container for collecting the coffee infusion, hereinafter more simply referred to as "coffee", produced by such coffee-maker. There are also known coffee-makers with external coffee dispensers which are provided with one or more spouts for delivering the coffee directly into the cups. In the above cases, the arrangement of the several parts restricts the design of new coffee-makers from the structural and functional point of view.

In particular, the shape and the arrangement of the boiler for heating the water and the arrangement of the funnel containing the ground coffee, inside the boiler itself, cause the water to take a relatively long time to heat up, due to the predominance in the height of the boiler with respect to the width, which results in a limited supporting surface and a limited surface in contact with a source of heat. Moreover, in the known types of coffee-makers, the use of conventional filters, due to the lack of a separate infusion chamber, makes it necessary to refill the filter with ground coffee each time the drink is required, with the inconvenience of scattering ground coffee and of making a mess both when filling and when emptying the filter.

The scope of this invention is to provide a new coffee- -maker, capable of remedying the aforementioned problems and which makes it possible to overcome the design limitations intrinsecally connected with the structures of the known coffee-makers, which from a structural and functional point of view are composed of different parts capable of carrying out separate functions and of assuming a different shape and/or arrangement in space, according to the specific requirements.

A further scope of this invention is to provide a coffee -maker of the aforementioned type, provided with a boiler for heating the water which is capable of simultaneously carrying out various functions, allowing the water to heat faster due to the greater heating surface exposed by the boiler to a source of heat.

A further scope of this invention is to provide a coffee -maker, as described, the component parts of which present a different spatial arrangement in order to allow a new freedom in shape and in design.

A still further scope of this invention is to provide a coffee-maker capable of allowing the use of special cartridge-type filters, which can be filled beforehand with a suitable quantity of coffee, and which are therefore ready for use, and such as to permit the use of the coffee-maker at any time or place without the risk of making a mess or scattering ground coffee as, on the contrary, occurs when using conventional coffee-makers.

The coffee-maker according to this invention is characterized by the fact that it comprises: a substantially flat supporting base, defining a heating chamber containing a given quantity of water, said heating chamber extending widthwise in the main plane of the base itself; a supporting column for an upper infusion chamber communicating with the heating chamber by means of a duct in the column, and a lid closing the infusion chamber, said lid comprising a coffee-dispensing chamber communicating with the aforesaid infusion chamber and respectively with at least one lateral output duct.

The base of the coffee-maker supporting the column and the infusion chamber is preferably delimited by an upper flat surface designed to constitute a surface for resting the cups or containers for collecting the coffee produced. Furthermore, said base presents a bottom surface suitable for placing in direct contact with a separate source of heat, or an associated source of heat forming part of the base of the coffee-maker itself.

According to another feature of the coffee-maker according to this invention, the infusion chamber is designed in such a way as to receive refillable cartridge-type filters, suitably prepared with a measured quantity of coffee, which can be stored in an appropriate container, ready for use.

The coffee-maker according to this invention will be described in greater detail hereunder with reference to the example in the accompanying drawings which illustrate the general features of the coffee-maker, bearing in mind that the shape and dimensions of the various component parts may also vary, without however deviating from the invention itself.

In the drawings:

Fig. 1 shows a longitudinal cross-sectional view of the coffee-maker;

Fig. 2 shows a plan view, seen from above;

Fig. 3 shows a detail of the lid for closing the infusion chamber;

Fig. 4 shows a cross-sectional view of a cartridge-type filter, designed for use with a coffee-maker according to the invention.

The coffee-maker is substantially composed of a supporting base 1, designed to define a boiler containing a measured quantity of water, a column 2 for supporting an upper infusion chamber 3, and a lid for closing the aforesaid infusion chamber, indicated altogether by reference 4.

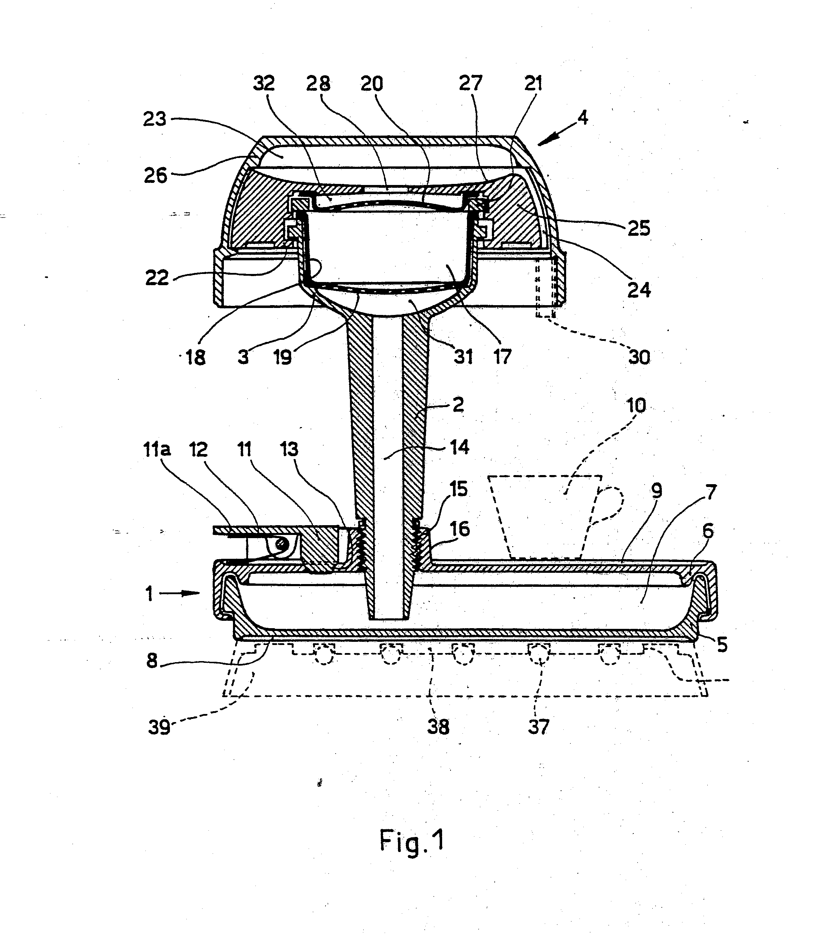

As shown in figure 1, the supporting base 1 is made up of two parts 5 and 6 connected together, for example, seamed and watertight, in order to define a chamber 7 of the boiler containing the water. The lower part 5 of the base is de-

0116286

limited downwards by a surface 8, suitable for placing in contact with an external source of heat, whilst the upper part 6 of said base is delimited upwards by a substantially flat surface 9, suitable for constituting a support for one or more cups or containers 10 for collecting the coffee made with such coffee-maker.

In particular, it can be seen that the base 1, and therefore the chamber 7 of the boiler containing the water, presents a substantially flat conformation which extends horizontally, rather than vertically, in order to offer the greatest possible heating surface for a given volume of water to be heated. In the example shown, the base 1 presents a circular shape, however it is obvious that the shape and the dimensions may also vary with respect to that shown, providing that the widthwise dimensions of the base remain substantially greater with respect to the dimensions in height, for the aforementioned reasons.

The base 1 comprises moreover, a valve 11, said valve being normally kept closed by a spring 12, against a seat of an aperture 13 made in the upper wall of the base 1. The valve 11 can be operated manually by pressing a side lever 11a, to allow the chamber 7 of the boiler to fill with water through the infusion chamber 3; the spring 12 must be suitably chosen in order to keep the valve closed when the water in the chamber 7 of the boiler comes to the boil during the preparation of the coffee; it is obvious that such valve 11 also constitutes a safety valve which opens automatically whenever the pressure of the steam or water in the chamber 7 exceeds a pre-established safety value.

The column 2 for supporting the infusion chamber 3, may present any conformation, either linear or curved, according to requirements, and comprises a longitudinal channel 14 for feeding the hot water from the chamber 7 of the boiler, to the upper infusion chamber 3, as shown. The column 2 supporting the infusion chamber may be secured in any way to the supporting base 1; for example, the lower end of such column may present an externally threaded portion 15 which screws tightly into an internally threaded collar 16 in correspondence with a hole in the upper part or wall 6 of the base 1; the lower end of the column 2 extends inside the chamber 7, close to the bottom 5, in order to allow all the heated water to flow up into the infusion chamber 3.

In the specific example, the column 2 and the infusion chamber 3 are built in one-piece, for example, obtained by casting, however it is obvious that other constructional solutions are possible for the entire coffee-maker, according to the constructional techniques and the materials adopted.

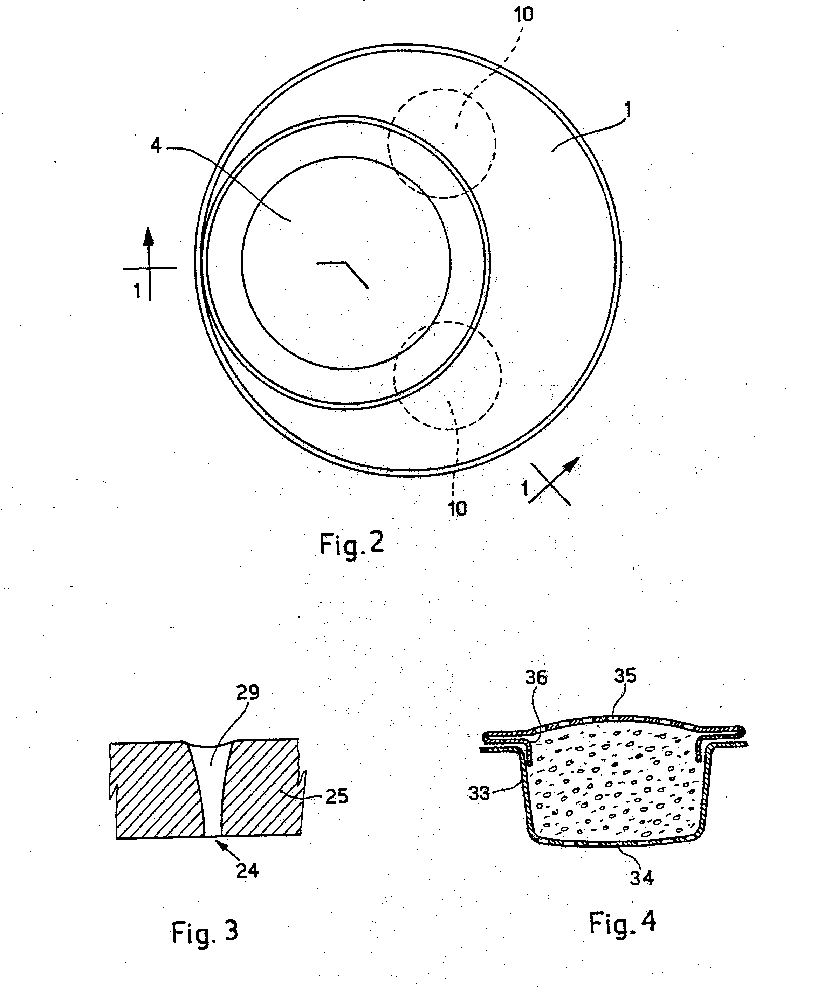

The infusion chamber 3 presents a substantially cylindrical conformation, with a concave bottom, for the reasons specified further on, and presents a circular ledge, close to its concave bottom, designed to constitute a seat for supporting a coffee-container and filter 17, for containing a suitable quantity of ground coffee. The filter 17 presents a substantially cylindrical side wall 18 which fits against the side wall of the infusion chamber 3, and a lower perforated wall 19 to allow the hot water to flow through the filter itself. The filter 17 is closed from above by means of a perforated upper wall 20, which in the case in question, is incorporated or forms part of the lid 4, for closing the infusion chamber; however, the wall 20 of the filter could also form an integral part of the same filter containing the ground coffee, as described further on with reference to figure 4. Lastly, reference 21 indicates a seal.

Still with reference to figure 1, it can be seen that the lid 4 for closing the infusion chamber, which may be screwed onto the latter, or secured by means of a bayonet connecting system 22, presents a particular conformation designed to define a chamber 23 for dispensing the coffee which is conveyed towards one or more lateral output channels 24, from which the coffee flows down into a cup or container 10 beneath, which is placed directly on the base 1 of the coffee-maker.

The fact that the container 10 for collecting the coffee rests directly on the upper wall 6 of the supporting base 1, or boiler for heating the water, that is to say, on a hot surface, makes it possible to suitably preheat the containers 10 in order to prevent the freshly-made coffee from becoming cold and at the same time makes it possible to keep the temperature for heating the containers themselves at a suitably low degree, due to the fact that said cup is placed on a surface not in direct contact with the source of heat.

In particular, the lid 4 of the infusion chamber is made in two separate pieces which are then seamed or otherwise tightly secured together; precisely by an internal dispenser 25 which closes the chamber 3, and by an external hood 26 which, together with the dispenser, defines the aforementioned dispensing chamber 23; the hood 26 presents an outer wall, of any shape, which extends downwards to cover, or totally or partially mask the infusion chamber 7, or part of the supporting column itself.

From figure 1, it can be seen moreover that the dispenser 25 presents an upper surface defining a concave bottom surface of the dispensing chamber 23, in order to permit the delivery of the coffee, by spilling from the delivery channels 24, and in order to prevent any stagnation of coffee. In this connexion, the dispenser 25 presents a central wall 27, with an axial hole 28 which puts the infusion chamber 3, by means of an intermediate quieting chamber 32, in communication with the dispensing chamber 23. Figure 1 and the detail in figure 3, show moreover that, according to a particular embodiment, each coffee output channel 24 is defined between the outer surface of the dispenser 25 for closing the infusion chamber, and the internal surface, facing the latter, of the hood 26; for example, each output channel 24 may be obtained, by machining or by casting, from a longitudinal semicircular-section groove 29 (fig. 3) made on the side surface of the piece 25 of the lid. The groove 29 may present a constant or downward converging width in correspondence with small tubes 30 fitted optionally on the hood 26, as shown by the dotted lines, each aligned with a corresponding channel 24.

The cross-section in figure 1 shows a further feature of the coffee-maker according to the invention; in fact, from said figure, it can be seen that the height of the coffee filter is less than the height of the infusion chamber 3. Consequently, an empty space is created ahead of the filter 17, between the bottom wall 19 of the filter and the concave bottom wall of the infusion chamber, which forms a space 31 for dispensing the hot water through the filter. In this way, the hot water flowing from the duct 14 is distributed evenly over the entire width of the filter itself; this prevents the forming of preferential flows and permits a better extraction of the aroma from the entire mass of the ground coffee, contained in the filter 17. Likewise, below the filter 17, between the wall 20 of the filter and the wall 27 of the dispenser 25, is created a quieting chamber 32, substantially equal in width to the filter 17, which communicates with the upper chamber 23 through the central aperture 28; this quieting chamber 32 serves to reduce or slow down the turbulence in the coffee which flows out under pressure from the filter, thereby preventing the coffee, which enters the dispensing chamber 23 with excessive pressure or turbulence, from spurting out of the output channels 24 at too high speed. Other means may be provided in place of the chamber 32 for slowing down the flow of coffee from the filter.

The coffee-maker according to this invention, besides the filter shown in figure 1, also allows the use of removable cartridge-type filters, one of which is schematically shown in the cross-section of figure 4. The filter in figure 4 is composed of a cylindrical container 33 with transversal dimensions corresponding to those of the infusion chamber 3 of the coffee-maker, said container 33 being provided with a perforated bottom 34 and closed directly by a lid or wall 35 having holes of smaller diameter than those of the aforesaid bottom 34. The lid 35 of the filter may be removably fitted, for example, by simple pressure, by means of an outer edge 36, obtained by suitably bending and shaping a blank disc. Both the bottom 34 of the container and the lid 35 are slightly concave, as shown.

In the case of figure 4, the cartridge-type filter is of the re-usable type, however, dispensable cartridge-type filters, made of any filtering material such as filter paper or fabric or the like, may be used. The cartridge-filter will have a shape of its own substantially corresponding to that of the infusion chamber, in the case in which it is made of metal or other rigid material, or a shape which adapts to that of the infusion chamber, when it is inserted in the latter; in all cases, the cartridge-filter is removably inserted in the aforesaid chamber.

The use of the cartridge-type filter is particularly advantageous in that it makes it possible to pre-fill the filter itself with a suitable quantity of ground coffee, thus avoiding waste, and avoiding making a mess and of scattering ground coffee in the places where the coffee is prepared or where the filter is emptied after use. The cartridge-type filters, already prepared with a suitable quantity of coffee, may also be stored in an appropriate container and used when required.

From what has been described and shown in the accompanying drawings, it is clear that the invention concerns a new and original coffee-maker, in which the particular spatial disposition of functionally different parts, makes it possible to arrange such parts differently, in a structurally new way, in order to carry out different functions, giving moreover, ample freedom of design in order to make coffee -makers in various shapes and sizes.

The advantages inherent to such solution are evident as, besides the specified scope, it gives the designer and the manufacturer the possibility of varying the shape and the appearance of the entire coffee-maker by simply modifying or replacing certain parts with others having an equivalent function; for example, it is possible to always use the same base 1, the column 2 and the dispenser 25, changing the hood 26 of the lid 4, or also change other parts in order to obtain coffee-makers of different shapes and appearances, starting from suitable pre-arranged pieces.

Therefore, what has been described and shown in the accompanying drawings, must be understood as illustrative of the innovatory features of the coffee-maker according to the invention, without this constituting a restriction

0116286

with regard to shapes, appearance, dimensions and materials which can be used for the various component parts. For example, in figure 1, a coffee-maker is shown, whose base 1 is suitable for placing in direct contact with an external source of heat, such as an electric hot-plate or gas-stove; the same figure 1 shows, by dotted lines, the possibility of providing the base 1 with an internal electric heating element 37, incorporated in a counterplate 38 applied or placed in direct contact with the lower part 5 of the base; an outer ring or band 39 secured to the base 1 serves as a support and conceals the counterplate 38 housing the heating element.

Claims

1. - Coffee-maker characterized by the fact that it comprises a substantially flat base (1) defining a heating chamber (7) for containing a suitable quantity of water, said heating chamber (7) extending widthwise in the main plane of the base (1) itself; a column (2) for supporting an upper infusion chamber (3) containing a coffee filter (17), said infusion chamber (3) communicating with the heating chamber (7) by means of a duct (14) in the column, and a lid (4) for closing the infusion chamber (3), said lid (4) comprising a coffee dispensing chamber (23) communicating with the infusion chamber (3) and respectively with at least one lateral output duct (24).

2. - Coffee-maker as claimed in claim 1, characterised by the fact that, ahead of the filter (17) containing the ground coffee, the infusion chamber (3) defines a space (31) for dispensing the hot water through the filter (17) itself.

3. - Coffee-maker as claimed in claim 1, characterized by the fact that the dispensing chamber (23) communicates with the infusion chamber (3) through quieting means situated downstream of the aforesaid filter.

4. - Coffee-maker as claimed in claim 3, characterized by the fact that said quieting means consist of a quieting chamber (32) between the infusion chamber (3) and said dispensing chamber (23.

5. - Coffee-maker as claimed in claim 1, characterized by the fact that the lid (4) of the infusion chamber (3) comprises an internal dispensing element (25), designed to hermetically close the infusion chamber (3), and an external hood (26), the opposing surfaces of said dispenser (25) and said hood (26) defining the aforesaid dispensing chamber (23).

6. - Coffee-maker as claimed in claim 5, characterized by the fact that the uppermost surface (27) of the dispenser (25) defines a concave bottom of the dispensing chamber (23).

7. - Coffee-maker as claimed in claims 1 and 5, characterized by the fact that said coffee-output ducts (24) are defined by opposing surfaces of the dispenser (25) and of the hood (26) constituting the lid (4).

8. - Coffee-maker as claimed in claim 7, characterized by the fact that each of said coffee-output ducts (24) consists of a longitudinal slot on the lateral surface of the dispensing element (25).

9. - Coffee-maker as claimed in claim 7, characterized by the fact that said slot (24) converges downwards.

10. - Coffee-maker as claimed in any of the claims from 1 to 9, further characterized by small extension tubes (30) for the output channels (24), fixed inside the hood (26) of the lid (4) closing the infusion chamber (3).

0116286

11. - Coffee-maker as claimed in claim 1 or claim 5, characterized by the fact that the lid (4) or the aforesaid dispensing element (25) present connection means to the infusion chamber (3).

12. - Coffee-maker as claimed in claim 3, characterized by the fact that a closing wall of the coffee-filter (17) is arranged in the lid (4) closing the infusion chamber, and that said quieting means for the coffee comprise a quieting chamber (32) formed between the closing wall of the filter (17) and a central wall in the dispensing element (25) of the lid, which separates the dispensing chamber (23).

13. - Coffee-maker as claimed in claim 1, further characterized by the fact that the base (1) presents a manually -operated safety valve (11) on the upper side.

14. - Coffee-maker as claimed in claim 1, characterized by the fact that the base (1) presents a substantially flat upper surface (9) for supporting cups (10) designed to receive the coffee infusion.

15. - Coffee-maker as claimed in claim 1, characterized by the fact that the base (1) presents a lower surface (8) designed to rest on an external source of heat.

16. - Coffee-maker as claimed in claim 1, characterized by the fact that the base (1) comprises electrical means (37) for heating the water.

17. - Coffee-maker as claimed in claim 1, characterized by the fact that said filter (17) is in the form of a cartridge-type container, removably housed in the infusion chamber (3).

18. - Coffee-maker as claimed in claim 17, characterized by the fact that said cartridge-type filter (17) presents a shape substantially corresponding to that of the infusion chamber (3).

19. - Coffee-maker as claimed in claim 17, characterized by the fact that said filter (17) is in the form of a closed container having a peripheral wall (33), a bottom wall (34) and an upper closing wall (35), said bottom (34) and upper (35) walls being densely perforated.

20. - Coffee-maker as claimed in claim 17, characterized by the fact that the bottom and upper walls (34, 35) of the filter (17) are concave.

21. - Coffee-maker as claimed in claim 17, characterized by the fact that said cartridge-type filter (17) is made of filtering material which adapts to the shape of the infusion chamber (3).

Fig.1

-212-

Fig.2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | FR-A- 701 434 (MAURI)<br>* Whole document * | 1,2,16 | A 47 J 31/30 |
| Y | FR-A- 702 633 (GREBEL)<br><br>* Whole document * | 1,14,<br>15 | |
| A | FR-A- 461 159 (RIBIERE)<br><br>* Whole document * | 1,2,13<br>,15 | |
| A | FR-A-2 347 014 (KOUTEX S.R.L.) | | |
| A | US-A-2 654 306 (SACKER) | | |
| A | FR-A-1 214 034 (ROSTI) | | TECHNICAL FIELDS SEARCHED (Int. Cl. 3)<br><br>A 47 J |
| A | US-A-2 620 088 (TELLANDER) | | |

The present search report has been drawn up for all claims

| Place of search | Date of completion of the search | Examiner |
|---|---|---|
| THE HAGUE | 16-04-1984 | SCHARTZ J. |